# EUROPÄISCHE PATENTANMELDUNG

(11) **EP 2 385 699 A1**
(43) Veröffentlichungstag der Anmeldung: **09.11.2011**
(21) Anmeldenummer: 10162041.7
(22) Anmeldetag: 05.05.2010
(51) Int. Cl.: H04N 5/445, H04H 60/72

(54) **Vorrichtung und Verfahren zur Aufbereitung und Anzeige eines via digitalem Rundfunk übertragenen Fernsehprogramms**

(71) Anmelder: Fraunhofer-Gesellschaft zur Förderung der Angewandten Forschung e.V., 80686 München (DE); Friedrich-Alexander-Universität Erlangen-Nürnberg, 91054 Erlangen (DE)
(72) Erfinder: Beer, Frederik, 91054 Erlangen (DE); Forster, Christian, 90403 Nürnberg (DE); Mull, Andreas, 90482 Nürnberg (DE); Heuberger, Albert, 91056 Erlangen (DE); Gerhäuser, Heinz, 91344 Waischenfeld (DE)
(74) Vertreter: Schenk, Markus

(57) **Zusammenfassung**

Eine Vorrichtung zur Aufbereitung und Anzeige eines via digitalem Rundfunk übertragenen interaktiven Fernsehprogramms weist einen Dateiaufbereiter und einen Web-Browser auf. Der Dateiaufbereiter ist ausgebildet, um aus dem digitalen Rundfunk Fernsehprogrammdateien zu extrahieren und die Dateien in einen gemeinsamen Namensraum abzubilden. Der Web-Browser ist ausgebildet, um ansprechend auf Benutzer-Interaktionen anzuzeigende Fernsehprogrammdateien aus den in den Namensraum abgebildeten Fernsehprogrammdateien auszuwählen und anzuzeigen.

## Beschreibung

Ausführungsbeispiele der Erfindung beziehen sich auf eine Vorrichtung und ein Verfahren zur Aufbereitung und Anzeige eines via digitalem Rundfunk übertragenen interaktiven Fernsehprogramms.

Weitere Ausführungsbeispiele der Erfindung beziehen sich auf ein System zur Aufbereitung eines via digitalem Rundfunk übertragenen interaktiven Fernsehprogramms zur Darstellung mittels konventioneller Webtechniken.

Auf dem Themengebiet der interaktiven Fernseh- bzw. TV-Anwendungen gibt es gemäß dem Stand der Technik die folgenden Systeme/Konzepte.

Ein bekanntes System ist ESG/EPG (Electronic Service Guide, elektronischer Dienstfiihrer/Electronic Program Guide, elektronischer Programmfiihrer), welches als Programmführer konzipiert ist. Als ESG/EPG bezeichnet man üblicherweise elektronisch verbreitete Informationen über laufende und kommende Fernseh- oder Radioprogramme, womit beispielsweise eine Programmübersicht mit Titel, Uhrzeit und Dauer einer ausgestrahlten Sendung angezeigt werden kann. Im Falle von ESG kann Interaktivität jedoch nur in dem Maße genutzt werden, wie diese im Standard verankert sind. Dabei werden insbesondere spezielle Schlüsselworte zur Definition verschiedener "Interaktivitätsfälle" verwendet.

Ein weiteres bekanntes System ist DVB-MHP (Digital Video Broadcasting, digitaler Videorundfunk-Multimedia Home Platform, Multimedien-Heim-Software-Plattform). Im Falle von DVB-MHP überträgt MHP eine Java-Anwendung auf eine STB (Set-Top-Box, Beistellgerät). Diese kann mit dem Benutzer interagieren. MHP fungiert jedoch als "Add-On" (Zusatz) zu einem linearen Programmangebot.

Schließlich gibt es das bekannte HbbTV-System. HbbTV (Hybrid Broadcast Broadband TV, hybrides Rundfunkbreitband TV) baut auf Webtechniken auf, um die Darstellungen zusätzlicher Inhalte (Werbung, Abstimmungen, Spiele, Videotext etc.) und die Beeinflussung des Programms zu realisieren. Dabei ist HbbTV jedoch wiederum als Zusatz-Framework (Add-On", Zusatzgerüst) zu einem bestehenden linearen AV-Programm konzipiert.

Ein generelles Problem eines im Stand der Technik bekannten Systems ist somit, dass es zwei getrennte logische Verteilungswege zur Übertragung eines linearen und eines nicht linearen Programminhalts gibt. Dabei wird beispielsweise der lineare Programminhalt (z. B. Videoinhalte) über eine Satellitenverbindung übertragen, während der nicht-lineare Programminhalt (d. h. Zusatzinformationen) beispielsweise über eine Internet-Verbindung übertragen wird.

Die Aufgabe der vorliegenden Erfindung besteht daher darin, ein Konzept zur Aufbereitung und Anzeige eines via digitalem Rundfunk übertragenen interaktiven Fernsehprogramms zu schaffen, das eine dynamische Verwaltung und/oder eine flexiblere (nahtlose) Einbindung von interaktiven Fernsehprogramminhalten ermöglicht.

Diese Aufgabe wird durch eine Vorrichtung nach Anspruch 1, ein Verfahren nach Anspruch 9 oder ein Computerprogramm nach Anspruch 10 gelöst.

Ausführungsbeispiele der Erfindung schaffen eine Vorrichtung zur Aufbereitung und Anzeige eines via digitalem Rundfunk übertragenen interaktiven Fernsehprogramms, die einen Dateiaufbereiter und einen Web-Browser aufweist. Hierbei ist der Dateiaufbereiter ausgebildet, um aus dem digitalen Rundfunk Fernsehprogrammdateien zu extrahieren und die Dateien in einen gemeinsamen Namensraum abzubilden. Ferner ist der Web-Browser ausgebildet, um ansprechend auf Benutzer-Interaktionen anzuzeigende Fernsehprogrammdateien aus den in den Namensraum abgebildeten Fernsehprogrammdateien auszuwählen und anzuzeigen.

Der Kerngedanke der vorliegenden Erfindung ist, dass die oben genannte dynamische Verwaltung/flexiblere Einbindung erreicht werden kann, wenn aus dem digitalen Rundfunk extrahierte Fernsehprogrammdateien in einen gemeinsamen Namensraum abgebildet werden und ansprechend auf Benutzer-Interaktionen anzuzeigende Fernsehprogrammdateien aus den abgebildeten Fernsehprogrammdateien ausgewählt und angezeigt werden. Dadurch können zwei getrennte logische Verteilungswege für einen linearen bzw. einen nicht-linearen Programminhalt zu einem einzigen Pfad für ein beliebiges auf dem digitalem Rundfunk basierendes Verteilungssystem zusammengefasst werden, was eine Vereinfachung und gleichzeitig eine höhere Flexibilität bei der Implementierung einer interaktiven TV-Anwendung mittels konventioneller (plattformunabhängiger) Webtechniken ermöglicht.

Bei weiteren Ausführungsbeispielen der Erfindung ist der Dateiaufbereiter als Schnittstelle zwischen dem Web-Browser und einem für den digitalen Rundfunk geeigneten Übertragungsmedium ausgebildet, so dass die Anzeige des übertragenen Fernsehprogramms von dem jeweiligen Übertragungsmedium entkoppelt und unabhängig ist. Durch die Entkopplung der Anzeige vom jeweiligen Übertragungsmedium, bei der der Dateiaufbereiter gewissermaßen als Zwischenschicht zwischen dem Web-Browser und dem Übertragungsmedium dient, kann das vorliegende Konzept als Software-System fast unverändert für alle möglichen Übertragungswege verwendet werden.

Weitere Ausführungsbeispiele der Erfindung schaffen ein Verfahren zur Aufbereitung und Anzeige eines via digitalem Rundfunk übertragenen interaktiven Fernsehprogramms. Dabei werden zunächst Fernsehprogrammdateien aus dem digitalen Rundfunk extrahiert. Dann werden die Dateien in einen gemeinsamen Namensraum abgebildet. Schließlich werden anzuzeigende Fernsehprogrammdateien aus den in den Namensraum abgebildeten Fernsehprogrammdateien ansprechend auf Benutzer-Interaktionen ausgewählt und angezeigt.

Ausführungsbeispiele der Erfindung werden nachfolgend Bezug nehmend auf die beiliegenden Figuren, in denen gleiche oder gleichwirkende Elemente mit gleichen Bezugszeichen bezeichnet sind, näher erläutert. Es zeigen:
- Fig. 1: eine Prinzipdarstellung einer Vorrichtung zur Aufbereitung und Anzeige eines via digitalem Rundfunk übertragenen interaktiven Fernsehprogramms gemäß Ausführungsbeispielen der Erfindung;
- Fig. 2: einen schematischen Aufbau eines Systems zur Aufbereitung und Anzeige eines via digitalem Rundfunk übertragenen interaktiven Fernsehprogramms gemäß weiteren Ausführungsbeispielen der Erfindung;
- Fig. 3: ein Anwendungsszenario für ein in der Fig. 2 gezeigtes System aus Benutzersicht gemäß weiteren Ausführungsbeispielen der Erfindung; und
- Fig. 4: eine Veranschaulichung zur Realisierung einer Initialisierungsphase zur Anzeige einer Einstiegs-Webseite für einen Benutzer gemäß weiteren Ausführungsbeispielen der Erfindung.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

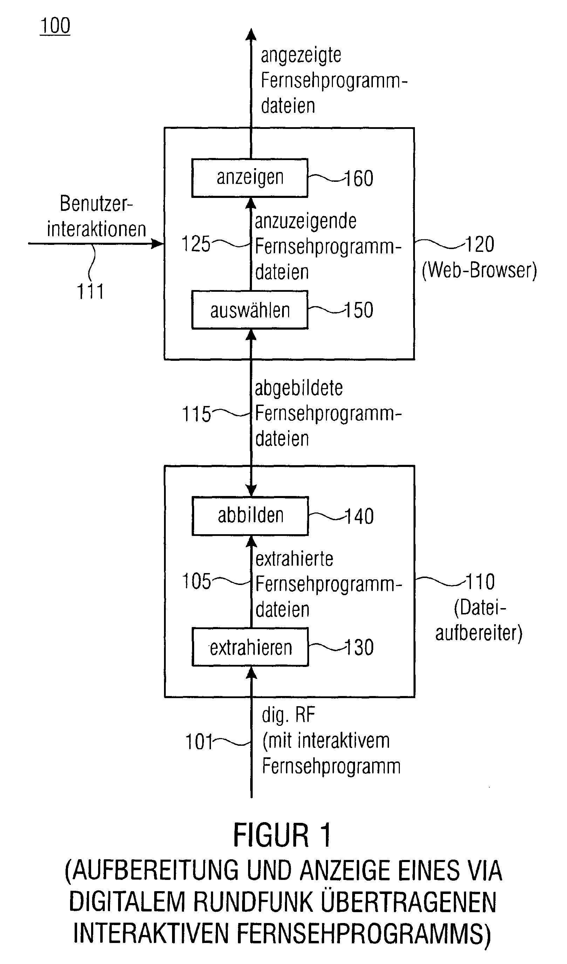

Fig. 1 zeigt eine Prinzipdarstellung einer Vorrichtung 100 zur Aufbereitung und Anzeige eines via digitalem Rundfunk übertragenen interaktiven Fernsehprogramms gemäß Ausführungsbeispielen der Erfindung. Wie in der Fig. 1 gezeigt, weist die Vorrichtung 100 einen Dateiaufbereiter 110 und einem Web-Browser 120 auf. Hierbei ist der Dateiaufbereiter 110 ausgebildet, um aus dem digitalen Rundfunk 101 Fernsehprogrammdateien zu extrahieren und die Dateien 105 in einen gemeinsamen Namensraum abzubilden. Ferner ist der Web-Browser 120 ausgebildet, um ansprechend auf Benutzer-Interaktionen 111 anzuzeigende Fernsehprogrammdateien 125 aus den in den Namensraum abgebildeten Fernsehprogrammdateien 115 auszuwählen und anzuzeigen.

Insbesondere sind bei weiteren Ausführungsbeispielen der Erfindung der Web-Browser 120 und der Dateiaufbereiter 110 unabhängig voneinander auf einem Prozessor ausführbarer Programme, wie es in der Fig. 1 beispielhaft durch die getrennten Blöcke 110, 120 dargestellt ist. Der Dateiaufbereiter 110 bildet im Wesentlichen die aus dem digitalen Rundfunk 101 extrahierten Fernsehprogrammdateien 105 ab, während der Web-Browser 120 auf die so abgebildeten Fernsehprogrammdateien 115 interaktiv zugreifen kann.

Ferner ist bei weiteren Ausführungsbeispielen der Erfindung der Dateiaufbereiter 110 als Schnittstelle zwischen dem Web-Browser 120 und einem für den digitalen Rundfunk geeigneten Übertragungsmedium 101 derart ausgebildet, dass die Anzeige des übertragenen Fernsehprogramms von dem jeweiligen Übertragungsmedium 101 entkoppelt und unabhängig ist. Der dabei als Zwischenschicht dienende Dateiaufbereiter 110 kann somit ein über ein beliebiges Übertragungsmedium bzw. Verteilungssystem des digitalen Rundfunks übertragenes interaktives Fernsehprogramm für einen dynamischen bzw. entkoppelten Zugriff des Web-Browsers 120 aufbereiten. Dadurch kann eine praktisch universell einsetzbare Software-Lösung konzipiert werden, die insbesondere eine Abbildung der Dateien und ein Zur-Verfügung-Stellen selbiger für den Web-Browser unabhängig vom jeweiligen Übertragungsmedium ermöglicht, so dass die Implementierung eines interaktiven Fernsehsystems bei gleichzeitig erhöhter Flexibilität vereinfacht werden kann.

Insbesondere weist bei weiteren Ausführungsbeispielen der Erfindung der Dateiaufbereiter 110 Schnittstellen in unterschiedlichen Übertragungskanälen auf, die jeweils ein Übertragungsmedium aus einem oder mehreren Übertragungsmedien DVB-H (Digital Video Broadcasting-Handhelds, digitaler Videorundfunk für Handgeräte), DVB-SH (Digital Video Broadcasting-Satellite Services to Handheld Devices, digitaler Videorundfunk über Satellit für Handgeräte) oder WLAN aufweisen. Ferner ist dabei auch jegliches andere IPbasierte Übertragungsmedium denkbar.

Bei weiteren Ausführungsbeispielen kann der Dateiaufbereiter 110 ausgebildet sein, um in einem digitalen Rundfunksignal 101 nach Datei-basierten Fernsehkanälen zu suchen und für jeden Datei-basierten Fernsehkanal eine HTML-Datei in dem Namensraum anzulegen. Hierbei ist die HTML-Datei ausgebildet, um den Web-Browser 120 zu veranlassen, den Datei-basierten Fernsehkanal abzuspielen. Dadurch kann beispielsweise für jeden Fernsehkanal eine Webseite erstellt werden, in die interaktive Elemente bzw. Objekte, wie beispielsweise Buttons (Knöpfe) oder ein Mausklick eingebunden sein können. Mit Hilfe dieser interaktiven Elemente/Objekte kann die Anzeige eines Fernsehprogramms im Web-Browser durch einen Benutzer dynamisch beeinflusst werden. Beispielsweise kann während des Abspielens eines laufenden Programms ansprechend auf ein Aktivieren eines Buttons durch den Benutzer ein zugeordneter Beitrag geholt und an das laufende Programm angehängt werden. Solch ein Szenario entspricht somit einer Realisierung eines interaktiven Fernsehsystems, bei dem die Programmauswahl und Einspielung zusätzlicher Informationen, die beispielsweise eine Beschreibung des Inhalts einer Sendung umfassen, durch eine dynamische Verwaltung erfolgt.

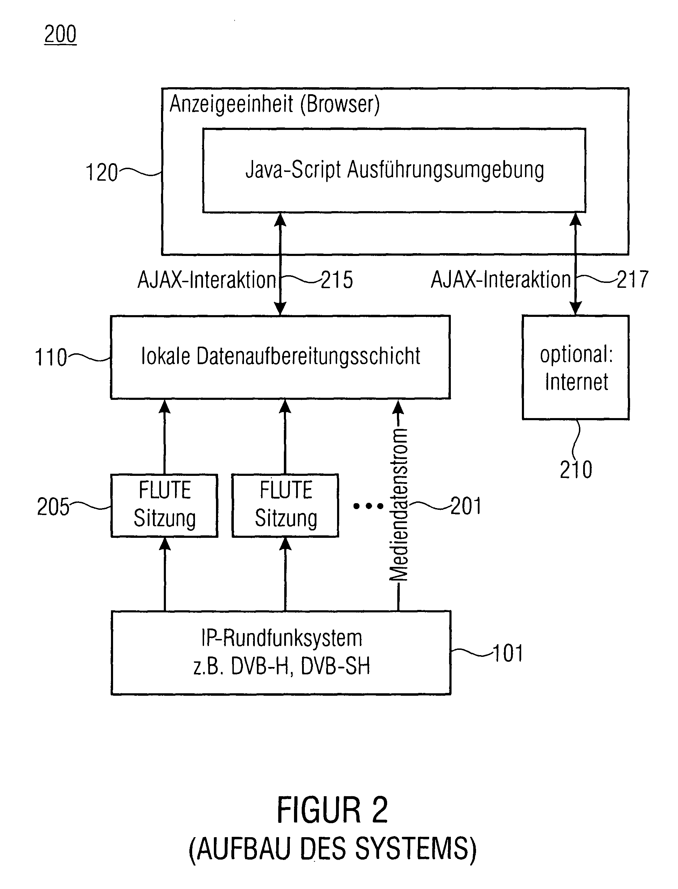

Fig. 2 zeigt einen schematischen Aufbau eines Systems 200 zur Aufbereitung und Anzeige eines via digitalem Rundfunk übertragenen interaktiven Fernsehprogramms gemäß weiteren Ausführungsbeispielen der Erfindung. Das System 200 der Fig. 2 entspricht im Wesentlichen der Vorrichtung 100 der Fig. 1. Im Folgenden wird das in der Fig. 2 gezeigte System 200 beispielhaft anhand des Protokoll-Frameworks (bzw. der Protokoll-Grundstruktur) von DVB-H beschrieben. Es ist anzumerken, dass sich die vorliegende Erfindung jedoch ohne Aufwand auch auf andere Übertragungssysteme anwenden lässt. Der im Folgenden verwendete Begriff "Programm" bezeichnet einen inhaltlich zusammenhängenden Fluss von Informationen, die von einem Konsumenten als Einheit empfunden werden.

Bei dem System 200 erfolgt der Empfang von Daten beispielsweise via DVB-H und "Flute"-Protokoll. Wie im Block 101 der Fig. 2 gezeigt, können die Daten über digitalen Rundfunk, wie beispielsweise mittels eines IP-Rundfunksystems (z. B. DVB-H, DVB-SH), z. B. als Mediendatenstrom 201 oder als Medien- bzw. Videodateien übertragen werden. Insbesondere kann dabei jeder Beitrag oder logische Einheit des Fernsehprogramms als eine Medien-/Videodatei übertragen werden. Bei Ausführungsbeispielen können Dateien verteilt werden, welche aneinandergehängt wieder ein Fernsehprogramm ergeben. Als Flute-Protokoll bezeichnet man im Allgemeinen ein Protokoll zur Übertragung von Dateien, wobei die Dateien nur von einem Endgerät empfangen, aber nicht zurückgesendet werden (unidirektionale Übertragung).

Bei weiteren Ausführungsbeispielen der Erfindung ist der Dateiaufbereiter 110 ausgebildet, um einen Teil der Fernsehprogrammdateien aus einer Flute-Sitzung 205 zu extrahieren und um den extrahierten Teil der Fernsehprogrammdateien zusammen mit einer HTML-Datei, die auf die Fernsehprogrammdateien verweist, in einem Speicher abzulegen. Bezug nehmend auf Fig. 2 ist der Dateiaufbereiter als "lokale Datenaufbereitungsschicht" im Block 110 bezeichnet, während der Web-Browser als "Anzeigeeinheit (Browser)" im Block 120, der eine Java-Script Ausführungsumgebung umfasst, bezeichnet ist. Die Bezeichnung "lokale Datenaufbereitungsschicht" bezieht sich, wie im Vorhergehenden beschrieben, darauf, dass es sich bei dem Block 110 um eine Zwischenschicht zwischen dem Block 101 (IP-Rundfunksystem) und dem Block 120 (Browser) handelt.

Der Dateiaufbereiter 110 bzw. die lokale Datenaufbereitungsschicht ermöglicht es, dass durch den Web-Browser 120 abfragbare Elemente, d. h. die extrahierten Fernsehprogrammdateien bzw. die darauf verweisende HTML-Datei, in einem Speicher vorhanden sind und mitgeteilt werden und dass diese, wenn sie angefordert werden, aus dem Speicher geholt werden können. Der Abfrage- bzw. Holvorgang kann beispielsweise über eine bidirektionale AJAX-Interaktion, wie es in der Fig. 2 durch den Doppelpfeil 215 dargestellt ist, stattfinden. Alternativ dazu kann der Web-Browser 120 auch direkt mit dem Internet kommunizieren, um die erforderlichen Elemente abzurufen. Dies ist in der Fig. 2 durch die AJAX-Interaktion 217 mit dem Block 210 ("optional: Internet") dargestellt.

Ferner kann bei weiteren Ausführungsbeispielen der Dateiaufbereiter 110 ausgebildet sein, um die HTML-Datei in den gemeinsamen Namensraum abzubilden.

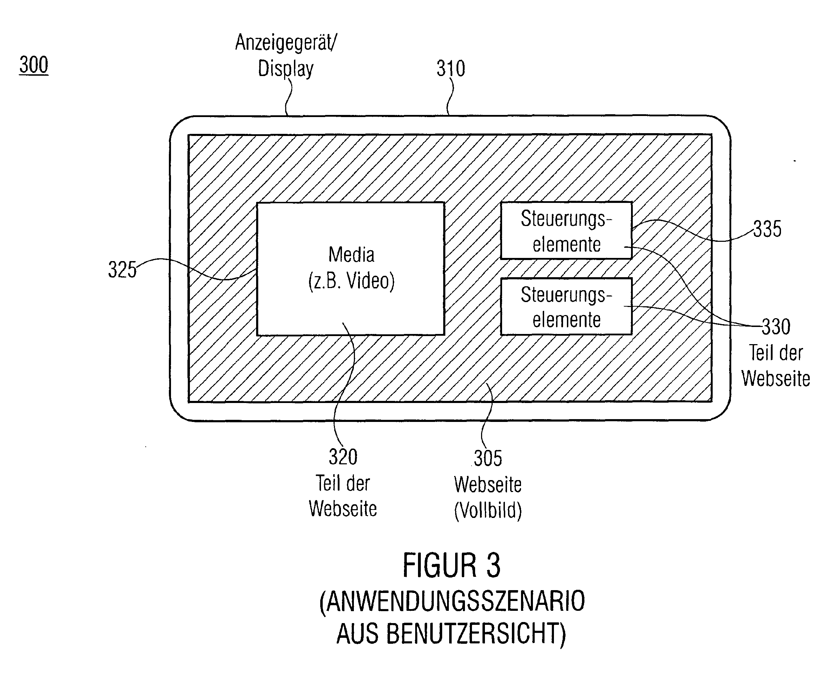

Fig. 3 zeigt ein Anwendungsszenario 300 für das in Fig. 2 gezeigte System 200 aus Benutzersicht gemäß weiteren Ausführungsbeispielen der Erfindung. Wie in der Fig. 3 gezeigt, stellt der Block 310 ein Anzeigegerät/Display mit einer Benutzeroberfläche dar, auf dem eine Webseite als Vollbild 305 (z. B. Vollbildmodus des Web-Browsers) angezeigt wird. Bei Ausführungsbeispielen umfasst ein Teil 320 der Webseite einen integrierten Mediaplayer (Medienabspieler), mit dem Medieninhalte und insbesondere Videodateien ("Media, z. B. Video") abgespielt werden können. Darüber hinaus weist ein anderer Teil 330 der Webseite Steuerungselemente 335 auf, mit denen der Benutzer die Anzeige eines Fernsehprogramms bzw. der dazu gehörenden Videodateien steuern kann. Insbesondere realisiert das in der Fig. 3 gezeigte Anwendungsszenario 300 einen Fernsehkanal als Webseite mit verschiedenen Interaktionsmöglichkeiten durch zusätzliche Steuerfunktionen.

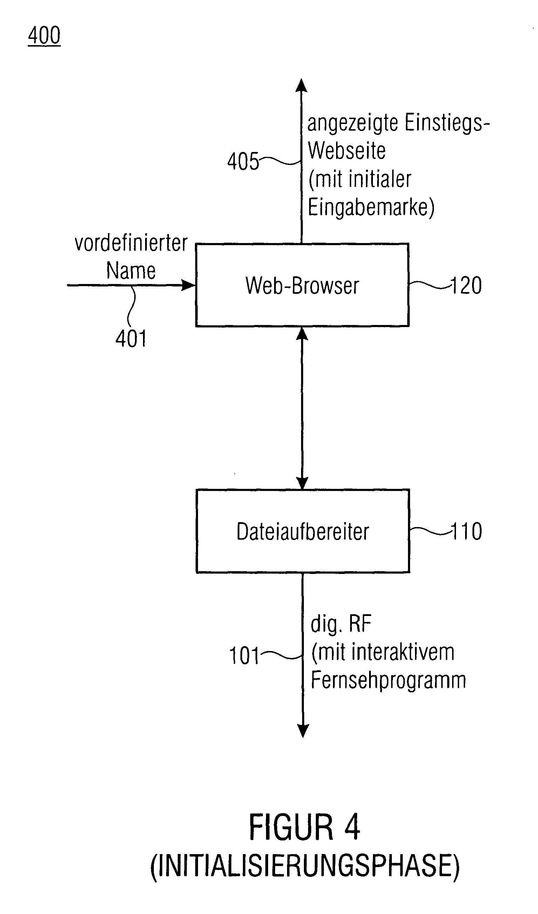

Fig. 4 zeigt eine Veranschaulichung zur Realisierung einer Initialisierungsphase 400 zur Anzeige einer Einstiegs-Webseite für einen Benutzer gemäß weiteren Ausführungsbeispielen der Erfindung. In der in der Fig. 4 gezeigten Initialisierungsphase 400 greift der Web-Browser 120 auf einen vordefinierten Namen 401 im Namensraum zu. Ferner extrahiert der Dateiaufbereiter 110 eine dem vordefinierten Namen 401 zugeordnete Einstiegs-Webseite 405 aus dem digitalen Rundfunk 101. Auf diese Weise kann in der Initialisierungsphase 400 die Einstiegs-Webseite 405 mit einer initialen Eingabe-Maske für einen Benutzer bereitgestellt und angezeigt werden. Insbesondere kann der Benutzer über die Eingabe-Maske die Anfangseinstellungen vornehmen, um so den weiteren Programmablauf steuern zu können.

Im Folgenden werden weitere erfindungsgemäße Aspekte der Datenaufbereitung und der Visualisierung der Medieninhalte im Zusammenhang mit dem im Vorhergehenden beschriebenen System näher erläutert. Der Empfang von Daten erfolgt via DVB-H und Flute-Protokoll. Es gibt mehrere Flute-Sitzungen, je nach Bedarf. Pro Programm existiert genau eine ausgezeichnete (besondere) Flute-Sitzung, die als Einstiegs-Sitzung bezeichnet wird und den initialen Inhalt überträgt. Die Zugriffsdaten auf diese initiale Flut-Sitzung werden mit Hilfe eines externen Mechanismus, z. B. Bootstrap-Sitzung (Urlade-Sitzung) über definierte Zugriffsdaten, bereitgestellt. Der externe Mechanismus stellt folgende Informationen für jedes Programm zur Verfügung. Zugriffsdaten auf initiale Flute-Sitzung, Name des Programms und Referenzname des Programms (Prg-Id). Die Daten aller zusammengehörenden Flute-Sitzungen werden durch die Datenaufbereitungsschicht in einen gemeinsamen Namensraum abgebildet und sind über ein spezielles Protokoll abfragbar. Dieses baut auf dem HTTP-Protokoll auf, so dass die zu übertragenden Objekte, wie später noch detaillierter beschrieben wird, mit Hilfe von AJAX-Anfragen erreichbar sind. Die Visualisierung der Medieninhalte erfolgt durch eine geeignete Anzeigeeinheit (Browser), die über eine Javascript-Umgebung verfügt.

Ein Programm wird dargestellt, in dem eine "initiale HTML-Seite" aktiviert wird. Diese Seite referenziert eigenen Javascript-Code, der die Aktualisierung und den weiteren Programmfluss steuert. Hierzu greift dieser auf Objekte der Datenaufbereitungsschicht mit Hilfe von AJAX zu.

Die "initiale HTML-Seite" wird als Teil der ausgezeichneten Flute-Sitzung übertragen und durch ein spezielles Schlüsselwort gekennzeichnet.

Aktualisierungen der Programminhalte werden durch bekannte FLUTE-Mechanismen unterstützt. Flute stelle hierzu einen Versionierungsmechanismus der übertragenen Objekte bereit. Dieser wird über das weiter unten noch näher beschriebene Zugriffsprotokoll verfügbar gemacht. Der Javascript-Code kann dadurch auf neue Inhalte prüfen.

Eine Ausnahme stellt die Aktualisierung der "initialen HTML-Seite" dar. Wird diese verändert, so wird der Prozess der Darstellung insgesamt neu gestartet und die Seite erneut geladen.

Bei weiteren Ausführungsbeispielen der Erfindung werden bei der Wiedergabe von Medieninhalten hinsichtlich der verfügbaren Darstellungsmethoden keine Einschränkungen gemacht. Grundsätzlich kann jedoch zwischen Datei-basierter Medienübertragung und klassischem Streaming unterschieden werden.

Das klassische Streaming nutzt hierbei die Standardmechanismen von DVB-H, wobei der Medienabspieler ein in die HTML-Seite eingebundenes Objekt darstellt. Als abzuspielende Medienobjekte werden die bei DVB-H üblichen SDP (session description protocol, Sit-zungsbeschreibungsprotokoll)-Dateien referenziert. Alle weiteren Zugriffsdaten sind anschließend in der SDP-Datei zu finden. Die Übertragung der SDP-Datei erfolgt mit Hilfe von Flute.

Die Datei-basierte Medienübertragung nutzt dagegen FLUTE-Objekte als Zwischenschicht. In Referenz auf [IETF draft-pantos-http-live-streaming-03] bietet sich die Verwendung einer "gleitenden Abspielliste" an. Diese referenziert die aktuell wiedergebbaren Mediendateien. Anhand dieser Abspielliste werden jeweils dynamisch die benötigten Medienelemente in die Anzeigeeinheit (Browser) eingebaut. Dies umfasst das gerade abzuspielende Element und in Vorbereitung die nächsten Elemente, wobei die Anzahl der nächsten Elemente, die ebenfalls eingebaut werden, variabel ist. Ist die Wiedergabe des aktuellen Elements beendet, wird automatisch auf das nächste Medienelement, welches bereits vorhanden ist, umgeschaltet. Das vergangene Element wird entfernt, und es werden wieder vorausschauend neue Elemente eingefügt.

Das weiter oben eingeführte Abfrageprotokoll baut gemäß weiteren Ausführungsbeispielen der Erfindung auf dem HTTP 1. Protokoll auf. Die Datenaufbereitungsschicht bildet alle verfügbaren Objekte in einem eigenen Zugriffs-Namensraum ab. Dieser Namensraum kann in dem darunterliegenden HTTP-Protokoll als "Request URL" (Fordere URL an) angesprochen werden. Auf den Inhalt der Objekte kann mit Hilfe der "HTTP GET" (Erhalte HTTP) Methode zugegriffen werden. Folgender Namensraum wird definiert:

| | |
|---|---|
| / | Wurzel des Namensraums |
| | |
| /current/ | Zugriff auf das aktuelle Programm |
| | |
| /<Prg-Id>/ | Zugriff auf das Programm mit der Id Prg-Id |
| | (das aktuelle Programm (current) ist ebenfalls vorhanden) |

Folgende Namne sind sowohl unter /current/, als auch unter/<Prg-ID>/gültig:

| | |
|---|---|
| .../index.html | Initiale HTML-Datei |

Unterhalb von /current/ sind alle Objekte referenziert, die über die FDTs (file descriptor table, Dateibeschreibungstabelle) aller zugehörigen Flute-Sitzungen des aktuellen Programms angekündigt werden. Es ist die Aufgabe des Programmanbieters, dafiir zu sorgen, dass keine Namenskonflikte entstehen.

Wird von der Anzeigeeinheit (oder Javascript-Code) auf die index.html Datei eines anderen Programms zugegriffen, so soll dies einen Programm-Umschaltvorgang auslösen. Das neue Programm wird anschließend unter /current/ verfiigbar. Hierbei ist zu beachten, dass die index.html des neuen Programms erst nach dem Umschaltvorgang geladen wird. Dadurch kann man sich ein ständiges Empfangen aller Programm index.htmls ersparen. Alternativ dazu ist es denkbar, dass ein Wiedergabegerät beispielsweise die index.html-Dateien aller Favoritensender ständig parat hält, um den Umschaltvorgang etwas zu beschleunigen.

Der Zugriff auf Datenobjekte eines Programms (unterhalb von /current/) erfolgt dagegen folgendermaßen:
1. Sofern der angeforderte Name in dem Namensraum existiert, wird die zugehörige Flute-Sitzung bestimmt. Anderenfalls wird ein Fehlercode erzeugt.
2. Wurde das angeforderte Objekt bereits empfangen, so wird dieses sofort ausgeliefert.
3. Ist das angeforderte Objekt noch nicht vorhanden, so wird der Request (bzw. das Anfordern) durch Zurücksenden des HTTP Kopfs bestätigt. Eine entsprechende Flute-Sitzung zum Empfang der Daten wird aktiviert und die empfangenen Daten direkt über die HTTP-Verbindung übertragen.
4. Abschließend wird die HTTP-Verbindung wieder geschlossen.

Bei weiteren Ausführungsbeisielen kann eine HEAD Abfrage (Kopfabfrage) zur Überprüfung der Aktualität durchgeführt werden. Mit Hilfe dieser Methode kann die Aktualität eines Flute-Objekts von der Anzeigeeinheit überprüft werden. Je nach Konfiguration der zugehörigen Flute-Sitzung werden u. a. auch Versionsinformationen des zugeordneten Flute-Objekts berücksichtigt, wie beispielsweise bei dem sogenannten "Split TOI" Konzept.

Bei weiteren Ausführungsbeispielen erfolgt das Auffinden und Verarbeiten von weiteren Flute-Sitzungen neben der ausgezeichneten Flute-Sitzung folgendermaßen. In der ausgezeichneten Flute-Sitzung wird eine Referenzdatei übertragen, die eine Liste aller weiteren zugehörenden Flute-Sitzungen enthält und welche Sitzungen permanent empfangen werden sollen. Diese Liste wird durch einen speziellen Mime-Type oder Namen gekennzeichnet. Die Datenaufbereitungsschicht empfängt von allen referenzierten Flute-Sitzungen die zugehörige FDT. Diese werden entsprechend der eingetragenen FDT-Expire-Zeit (FDT-Ablaufzeit) aktualisiert. Soll eine Flute-Sitzung nicht dauerhaft empfangen werden, so wird die Decodierung anschließend bis zur nächsten FDT-Aktualisierung oder der Anfrage nach einem beinhalteten Objekt eingestellt.

Bezug nehmend auf Fig. 1 weist ein Verfahren zur Aufbereitung und Anzeige eines via digitalem Rundfunk übertragenen interaktiven Fernsehprogramms gemäß weiteren Ausführungsbeispielen der Erfindung ein Extrahieren 130, ein Abbilden 140, ein Auswählen 150 und ein Anzeigen 160 auf. Dabei werden zunächst Fernsehprogrammdateien aus dem digitalen Rundfunk 101 extrahiert (Schritt 130). Dann werden die Dateien in einen gemeinsamen Namensraum abgebildet (Schritt 140). Schließlich werden anzuzeigende Fernsehprogrammdateien aus den in den Namensraum abgebildeten Fernsehprogrammdateien ansprechend auf Benutzer-Interaktionen 111 ausgewählt (Schritt 150) und angezeigt (Schritt 160).

Obwohl eine Übertragung eines Fernsehprogramminhalts im Vorhergehenden immer als Datei-basiert beschrieben wurde, ist es auch möglich, dass der Dateiaufbereiter 110 Videostrom-basierte Fernsehprogramme in den Namensraum abbildet und somit für einen Benutzer des Web-Browsers 120 zugänglich macht.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disk, einer CD, eines ROM, eines PROM, eines EPROM, eines EEPROM oder eines Flash-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement, z. B. ein FPGA (feldprogrammierbares Gatterarray), dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Zusammenfassend schaffen Ausführungsbeispiele der vorliegenden Erfindung ein System zur Aufbereitung eines Datenstroms, der mittels eines digitalen Rundfunksystems empfangene Mediadaten enthält. Die Aufbereitung erfolgt in der Gestalt, dass die Visualisierung der Medieninhalte mit Hilfe konventioneller Webtechnologien erfolgen kann. Diese umfassen u. a. und nicht ausschließlich HTML5, AJAX und Javascript. Die Bereitstellung der Medieninhalte erfolgt über eine definierte Abfrageschnittstelle (Protokoll), das speziell für diesen Anwendungsfall optimiert ist. Im Zentrum des Verfahrens steht eine Komponente, die den Push-orientierten (drückorientierten) Datenstrom des Rundfunksystems in das Pullorientierte (ziehorientierte) Framework (Grundstruktur) von AJAX einfügt. Mit Hilfe dieses Systems können sowohl lineare Programminhalte visualisiert, als auch nicht-lineare Darstellungskonzepte realisiert werden. Das Verfahren ermöglicht darüber hinaus auch Interaktionen mit dem Benutzer, z. B. Steuerung des Programmflusses, Werbung oder Spiele.

Insbesondere ermöglicht die Verwendung von Programmiersprachen, die im Web Usus sind, einerseits eine Losgelöstheit von der jeweiligen Hardware des Systems und andererseits eine flexiblere Gestaltung eines interaktiven Fernsehprogramms für einen Enduser (Benutzer).

Das in der vorliegenden Erfindung vorgestellte Verfahren ist im Gegensatz zu HbbTV dahin gehend vorteilhaft, dass es nicht mehr auf einem linearen Programm aufbaut, sondern dieser nur noch ein Spezialfall des neuen Systems ist. Die Webtechniken dienen nicht zur Realisierungen von zusätzlichem Content (Inhalt), sondern sind die Kernbestandteile des Systems, aus dem sich das Programmangebot zusammensetzt.

## Patentansprüche

1. Vorrichtung (100) zur Aufbereitung und Anzeige eines via digitalem Rundfunk übertragenen interaktiven Fernsehprogramms, mit folgenden Merkmalen:
einem Dateiaufbereiter (110), der ausgebildet ist, um aus dem digitalen Rundfunk (101) Fernsehprogrammdateien zu extrahieren und die Dateien (105) in einen gemeinsamen Namensraum abzubilden; und
einem Web-Browser (120), der ausgebildet ist, um ansprechend auf Benutzer-Interaktionen (111) anzuzeigende Fernsehprogrammdateien (125) aus den in den Namensraum abgebildeten Fernsehprogrammdateien (115) auszuwählen und anzuzeigen.

2. Die Vorrichtung nach Anspruch 1, bei der Web-Browser (120) in einer Initialisierungsphase (400) auf einen vordefinierten Namen (401) im Namensraum zugreift und der Dateiaufbereiter (110) eine dem vordefinierten Namen (401) zugeordnete Einstiegs-Webseite (405) aus dem digitalen Rundfunk (101) extrahiert, so dass in der Initialisierungsphase (400) die Einstiegs-Webseite (405) mit einer initialen Eingabe-Maske für einen Nutzer bereitgestellt und angezeigt wird.

3. Die Vorrichtung nach Anspruch 1 oder 2, wobei der Web-Browser (120) und der Dateiaufbereiter (110) unabhängig voneinander auf einem Prozessor ausführbare Programme sind.

4. Die Vorrichtung nach einem der Ansprüche 1 bis 3, wobei der Dateiaufbereiter (110) als Schnittstelle zwischen dem Web-Browser (120) und einem für den digitalen Rundfunk geeigneten Übertragungsmedium (101) ausgebildet ist, so dass die Anzeige des übertragenen Fernsehprogramms von dem jeweiligen Übertragungsmedium (101) entkoppelt und unabhängig ist.

5. Die Vorrichtung nach einem der Ansprüche 1 bis 4, wobei der Dateiaufbereiter (110) Schnittstellen in unterschiedlichen Übertragungskanälen aufweist, die jeweils ein Übertragungsmedium aus einem oder mehreren Übertragungsmedien DVB-H, DVB-SH oder WLAN oder ein anderes IP-basiertes Übertragungsmedium aufweisen.

6. Die Vorrichtung nach einem der Ansprüche 1 bis 5, wobei der Dateiaufbereiter (110) ausgebildet ist, um einen Teil der Fernsehprogrammdateien aus einer Flute-Sitzung (205) zu extrahieren und um den extrahierten Teil der Fernsehprogrammdateien zusammen mit einer HTML-Datei, die auf die Fernsehprogrammdateien verweist, in einem Speicher abzulegen.

7. Die Vorrichtung nach Anspruch 6, wobei der Dateiaufbereiter (110) ausgebildet ist, um die HTML-Datei in den gemeinsamen Namensraum abzubilden.

8. Verfahren zur Aufbereitung und Anzeige eines via digitalem Rundfunk übertragenen interaktiven Fernsehprogramms, mit folgenden Schritten:
Extrahieren (130) von Fernsehprogrammdateien aus dem digitalen Rundfunk (101);
Abbilden (140) der Dateien in einen gemeinsamen Namensraum; und
Auswählen (150) und Anzeigen (160) von anzuzeigenden Fernsehprogrammdateien aus den in den Namensraum abgebildeten Fernsehprogrammdateien ansprechend auf Benutzer-Interaktionen (111).

9. Computerprogramm mit einem Programmcode zum Durchführen des Verfahrens nach Anspruch 8, wenn das Computerprogramm auf einem Computer abläuft.
